# EUROPEAN PATENT APPLICATION

(11) **EP 3 358 866 A1**
(43) Date of publication of application: **08.08.2018**
(21) Application number: 18160058.6
(22) Date of filing: 11.01.2010
(51) Int. Cl.: H04W 4/46, H04W 40/20, H04W 4/021, H04W 80/04

(54) **SYSTEM AND METHOD FOR ENABLING IPV6-BASED COMMUNICATION IN A VANET**

(30) Priority: 09.01.2009 EP 09000210
(62) Divisional of application: 10700487.1
(71) Applicant: NEC Corporation, Tokyo 108-8001 (JP); Universidad Carlos III de Madrid, 28911 Leganes Madrid (ES)
(72) Inventor: Baldessari, Roberto, 69121 Heidelberg (DE); Zhang, Wenhui, 64295 Darmstadt (DE); Bernardos Cano, Carlos Jesús, 28942 Fuenlabrada (ES); Calderon Pastor, Maria, 28221 Majadahonda (Madrid) (ES)
(74) Representative: Patent- und Rechtsanwälte Ullrich & Naumann

(57) **Abstract**

A communication node for enabling IPv6-based communication in ad hoc network, wherein the communication node being storing a geographic position of the communication node, wherein a position based routing protocol is implemented for IPv6 packet, and wherein in said communication node at least two different types of logical links are provided for the transport of the IPv6 packet over sub-IP geographical routing, wherein one of said at least two different types of logical links is a geographical link being designed to have geographically scoped boundaries, wherein one of said at least two different types of logical links is a topological link being designed to have topologically scoped boundaries, is characterized in that said geographical link is a link-local multicast capable link and the IPv6 packet is transmitted with link-local multicast address via the geographical link. Furthermore, a corresponding method for a communication node for enabling IPv6-based communication in an ad hoc network is disclosed.

## Description

The present invention relates to a system and a method for enabling IPv6-based communication in a VANET (Vehicular Ad Hoc NETwork), wherein said VANET includes a plurality of communication nodes, said communication nodes being aware of their geographic position, as well as one or more attachment points providing access to an external infrastructure network, in particular the Internet, and wherein a position-based geographical routing protocol is implemented for routing data packets within said VANET.

Still further, the present invention relates to a method for a communication node and a communication node for enabling IPv6-based communication in ad hoc network, wherein the communication node being storing a geographic position of the communication node, wherein a position based routing protocol is implemented for IPv6 packet, and wherein in said communication node at least two different types of logical links are provided for the transport of the IPv6 packet over sub-IP geographical routing, wherein one of said at least two different types of logical links is a geographical link being designed to have geographically scoped boundaries, wherein one of said at least two different types of logical links is a topological link being designed to have topologically scoped boundaries.

Vehicular Ad-hoc Networks (VANETs), a particular type of Mobile Ad-hoc Networks (MANETs), are self-organizing, in itself infrastructure-free and, in general, highly dynamic/mobile wireless networks based on short range communication devices and wireless multi-hop technology. In VANETs, the communicating nodes/peers are vehicles and a short-range wireless communication technology is adopted, typically implemented in so called OBUs (On Board Units) that are installed within the vehicles.

For routing of data packets within a VANET, mechanisms based on geographic positions of vehicles have been proposed in research and industry consortiums and are expected to become part of international standards for Intelligent Transport Systems (ITS), e.g. ISO and ETSI standards. In the sequel, this kind of routing mechanisms is generally denoted "geographic routing". Examples of this kind of routing protocols are, for instance, the draft standard ETSI TS 102636-3-1 or the protocol described in WO 2008/092475 A1.

VANETs are expected to provide new peculiar services when connected to public network infrastructure, like the Internet, by means of dedicated Road Side Units (RSU). For example, many non timely-critical onboard infotainment applications require access to the Internet, in contrast to many timely-critical safety applications which typically use direct and local communication among neighboring vehicles/communication nodes ("information processed and consumed where generated"). Therefore, in VANETs, vehicles typically not only have to communicate with each other, but in addition with nodes of a network infrastructure (e.g. Internet) for safety and non-safety purposes.

Non-critical applications are expected to rely on the IPv6 protocol (Internet Protocol Version 6). Nevertheless, ad-hoc networks like VANETs do not present shared communication facilities with the properties required by many basic IPv6 mechanisms. For instance, IPv6 SLAAC (StateLess Address AutoConfiguration) relies on the concept of "link" as direct physical connection between an Access Router (AR) and its served nodes. The details of this link concept are specified in IETF - RFC 4861 (Internet Engineering Task Force - Request For Comments). In VANETs, however, the radio coverage is extended by means of wireless multi-hop technology, so that nodes can be connected to gateways through other nodes, spanning multiple links. As a consequence, due to the fact that a single link-local capable link between an AR and mobile nodes does not exist in MANETs nor in VANETs, existing solutions do not allow for providing VANET nodes with IPv6 Internet-based applications. In order to re-use standardized mechanisms, a link model for VANETs needs to be defined that is suitable for IPv6 basic mechanisms like e.g. SLAAC or Neighbor Discovery (according to IETF RFC 4861).

As already mentioned above, in addition to communicating with each other via the VANET vehicles can also communicate with each other via a network infrastructure like the Internet. In such hybrid communication scenarios, the system should allow nodes to select the optimal packet route for ongoing data flows, which requires IPv6 routes to be established in a flexible way and the link model provided by VANETs to be suitable for optimal packet routing.

It is therefore an object of the present invention to improve and further develop a system and a method of the initially described type for enabling communication in a VANET in such a way that it allows VANET nodes to exchange IPv6 packets with communication nodes in an infrastructure network (e.g., the Internet) or in the VANET by means of multi-hop communication, thereby relying as much as possible on existing standard IPv6 mechanisms.

In accordance with the invention, the aforementioned object is accomplished by a system comprising the features of claim 1. According to this claim, such a system is characterized in that in said communication nodes at least two different types of logical links are provided for the transport of IPv6 packets over sub-IP geographical routing, wherein one of said at least two different types of logical links is a geographical link - G link - being designed to have geographical logical boundaries, and wherein another of said at least two different types of logical links is a topological link - T link - being designed to have topological logical boundaries.

Furthermore, the aforementioned object is accomplished by a method comprising the features of independent claim 16. According to this claim, such a method is characterized in that in said communication nodes at least two different types of logical links are provided for the transport of IPv6 packets over sub-IP geographical routing, wherein one of said at least two different types of logical links is a geographical link - G link - being designed to have geographical logical boundaries, and wherein another of said at least two different types of logical links is a topological link - T link - being designed to have topological logical boundaries.

According to the invention it has been recognized that usage of IPv6 basic mechanisms for exchanging IPv6 packets with both communication nodes in an infrastructure network (e.g., the Internet) and in the VANET itself becomes possible with the provision of at least two different types of virtual links. The present invention therefore proposes to adopt two types of virtual communication interfaces (or 'links' as defined in IETF RFC 4861). The first type of virtual link (G, Geographical) is designed to have geographical logical boundaries. This means that packets transmitted via this link are delivered to the specific geographical area associated with the link. Hence, the G link is designed to be multicast capable, i.e. it supports a native mechanism at the link layer for sending packets to all (i.e., broadcast) or a subset of all neighbors (according to the definition given in IETF RFC 4861).

The second type of virtual link (T, Topological) is not subject to any geographical scope, but is characterized as a link having topological logical boundaries. This means that packets transmitted via this link are delivered on the basis of a hop counter that, e.g., is decremented each time a packet is forwarded by a communication node of the VANET.

As a result, the present invention proposes a node architecture and a framework for the application of IPv6 to VANETs, which is based on geographic routing and allows for the application of unmodified standard IPv6 mechanisms and for the selection of optimum packet routes. The different logical links provide the properties necessary to fulfill the aforementioned requirements, i.e. G virtual links can be used for vehicular communications involving nodes in the infrastructure since G supports standard IPv6 mechanisms (e.g. Neighbor Discovery). T virtual links allow VANET nodes to communicate with other VANET nodes that are not reachable via G. For example, T links can be used to establish optimized routes (directly through the VANET and not traversing the infrastructure). Consequently, the present invention enables hybrid vehicle-to-vehicle and vehicle-to-infrastructure communication based on IPv6 and geographical routing.

Splitting the integration of IPv6 and geographic routing into two types of logical links with the aforementioned properties provides the network with i) the degree of flexibility necessary for nodes to select the preferred route and ii) a consistent link model that allows for usage of IPv6 basic mechanisms based on link-local multicast addressing.

The present invention allows for the support and maximum re-usage of standard IPv6 in VANET and, consequently, for the compatibility with legacy IPv6 nodes located in the Internet. Furthermore, it allows network nodes (vehicles) to detect, establish and finally select preferred packet routes. Unlike other approaches in MANETs, it is compatible with IP-based solutions for mobility support like MIPv6 (Mobile IP Version 6) and NEMO (NEtwork MObility).

According to a preferred embodiment the G links are designed to be link-local multicast capable by mapping IPv6 link-local multicast addresses into sub-IP geographical areas. The link-local multicast support of G links is achieved by means of the geographical routing capability of a sub-IP layer, which is used to scope the multicast domain as a geographical area and to present the link as topologically reflexive and transitive. In other words, on G links IPv6 link-local multicast destination addresses are mapped into sub-IP geocast areas.

The sub-IP geographical areas that act as link-local multicast domain for a particular G link may be specified in different ways. For instance, the area can be enforced by letting RSUs use the area as target of their geocasted Router Advertisements (RAs) according to the mechanism described in WO 2009/018835 A1, the entire context of which is incorporated herein by way of reference. Alternatively, other mechanisms can be used to assign an area to a G link which is common to multiple VANET nodes, e.g., default areas may be employed, or they may be manually configured.

According to a specific embodiment a G link may be assigned a dynamic target area relative to the communication nodes' current geographical positions. In such case, communication nodes of the VANET would be enabled to employ the G links independently of whether a connection to an external infrastructure network is provided or not. For instance, the dynamic target area may be of pre-defined shape and size, and it may be centered or positioned relatively to the vehicles' position. Depending on the specific implementation, either each vehicle of the VANET or only selected vehicles may have assigned a geographical target area that acts as link-local multicast domain for a particular G link.

With respect to a particularly high flexibility, it may be provided that a plurality of the G links is employed simultaneously, in particular with the G links being associated to different geographic areas.

In contrast to IPv6 link-local multicast addresses, it may be provided that on the G links IPv6 unicast traffic, i.e. packets with IPv6 unicast destination addresses, is mapped into sub-IP unicast destination identifiers.

Advantageously, if an RSU is available, the G links may be employed for acquiring globally valid (a.k.a. globally routable) addresses for communication with nodes located in or attached to the Internet.

Referring now to the topological T links, it may be provided that, similar to the G links, also on the T links IPv6 unicast traffic is mapped into sub-IP unicast destination identifiers.

Although not conforming to current protocols, in specific cases it might be desired and suitable to allow some IPv6 broadcast traffic on the T links. In these cases the broadcast traffic may be mapped to a hop count-based broadcast at sub-IP layer. This means that each packet carries a counter that is decremented from hop to hop. When a communication node receives a packet for which the counter has reached the value "0", this packet will not be forwarded any further.

In order to allow for optimized packet routes via the VANET, the IPv6 source address of packets outgoing through T links may be an address assigned on a different interface. This implies that if the node is an IPv6 host (instead of a router) with respect to T links the node follows the weak end-system model as defined in IETF RFC 1122 (opposed to the strong end-system model defined in IETF RFC 1122).

According to an advantageous embodiment, multiplexing of packets the sub-IP geographical routing layer receives from the at least two logical links may be performed on the basis of the packet's destination address type. The same criterion may be applied for de-multiplexing of packets arriving at the sub-IP geographical routing layer together with delivering said packets to one of said logical links. In particular, it may be provided that IPv6 packets with a link-local multicast destination address are delivered via the G links, whereas unicast IPv6 packets are delivered via T links. Other criteria than the packet's destination address type may be employed for the multiplexing/de-multiplexing of packets. For instance, the multiplexing/de-multiplexing of packets may be performed on the basis of the area in which the packet's source node is located.

As already mentioned above, the logical network topology introduced by the present invention allows for detection and selection of both packet routes (i.e. via the Internet and via the VANET). The additional steps a vehicle may carry out before it is actually able to select a different route may include prefix detection, node reachability assessment, security signaling and injection of routes in the IPv6 routing table. Advantageously, the communication nodes are configured to inject IPv6 routes in their IPv6 routing table both for the G link and the T link operated by the sub-IP geographical routing layer or a management entity on behalf of it. Once both peers have injected the respective routes, IPv6 flows involving the peers' global addresses assigned on G links are routed via T links. This behavior is common for IPv6 routers, whereas for IPv6 hosts it implies the weak end-system model (as opposed to the strong end-system model defined in RFC 1122) but does not break any IETF standard.

With respect to keeping the node architecture as simple as possible, it may be provided that all G links are disabled in case no IPv6 multicast communication is required. For instance, this would be the case if no RSUs are available.

According to a preferred embodiment the T links may be employed for facilitating establishment of optimized packet routes for communication among passenger devices. For instance, in cases in which the vehicular VANET communication nodes constitute a network by themselves (e.g., since they include several passenger devices), communication among the devices of these vehicular networks does not require communication paths via the Internet (or any other infrastructure of the VANET), but can be carried out via T links within the VANET.

According to another preferred embodiment the G links may be configured to serve as egress interface for the IETF protocol Network Mobility Basic Support (NEMO, as defined in IETF RFC 3963). Using G links as egress interface to support NEMO is possible since Stateless Address Autoconfiguration is supported thanks to the properties of G links as described above.

Embodiments of the invention also relate to a system for enabling IPv6-based communication in a VANET (Vehicular Ad Hoc NETwork), wherein said VANET includes a plurality of communication nodes, said communication nodes being aware of their geographic position, as well as one or more attachment points providing access to an external infrastructure network, in particular the Internet, and wherein a position-based geographical routing protocol is implemented for routing data packets within said VANET.
1) According to first aspect of this system, in said communication nodes at least two different types of logical links are provided for the transport of IPv6 packets over sub-IP geographical routing, wherein one of said at least two different types of logical links is a geographical link - G link - being designed to have geographical logical boundaries, and wherein another of said at least two different types of logical links is a topological link - T link - being designed to have topological logical boundaries.
2) In a system according to aspect 1), said G links are designed to be link-local multicast capable by mapping IPv6 link-local multicast addresses into sub-IP geographical areas.
3) In a system according to aspect 2), said sub-IP geographical areas are manually configured or pre-defined with respect to shape and/or size.
4) In a system according to any of aspects 1) to 3), said G link is assigned a dynamic target area relative to said communication node's current geographical position.
5) In a system according to any of aspects 1) to 4), a plurality of said G links are employed simultaneously, said G links being associated to different geographic areas.
6) In a system according to any of aspects 1) to 5), on said G links IPv6 unicast traffic is mapped into sub-IP unicast destination identifiers.
7) In a system according to any of aspects 1) to 6), said G links are employed for acquiring globally valid addresses for communication with nodes located in the Internet.
8) In a system according to any of aspects 1) to 7), on said T links IPv6 unicast traffic is mapped into sub-IP unicast destination identifiers.
9) In a system according to any of aspects 1) to 8), broadcast traffic on T links is mapped to a hop count-based broadcast at sub-IP layer.
10) In a system according to any of aspects 1) to 9), IPv6 source addresses of packets outgoing through said T links are addresses assigned on a different interface.
11) In a system according to any of aspects 1) to 10), multiplexing of packets the sub-IP geographical routing layer receives from said at least two logical links and/or de-multiplexing of packets arriving at the sub-IP geographical routing layer together with delivering said packets to one of said logical links is performed on the basis of said packet's destination address type.
12) In a system according to any of aspects 1) to 10), multiplexing of packets the sub-IP geographical routing layer receives from said at least two logical links and/or de-multiplexing of packets arriving at the sub-IP geographical routing layer together with delivering said packets to one of said logical links is performed on the basis of the area in which said packet's source node is located.
13) In a system according to any of aspects 1) to 12), said communication nodes are configured to inject IPv6 routes in their IPv6 routing table for said G link and/or said T link operated by said sub-IP geographical routing layer or a management entity on behalf of it.
14) In a system according to any of aspects 1) to 13), said G links are disabled in case no IPv6 globally routable addresses are required or no IPv6 multicast communication is required.
15) In a system according to any of aspects 1) to 14), said T links are employed for facilitating establishment of optimized packet routes for communication among passenger devices.
16) In a system according to any of aspects 1) to 15), said G link is configured to serve as egress interface for the IETF protocols Mobile IPv6 and its extension Network Mobility Basic Support.

Embodiments of the invention also relate to a method for enabling IPv6-based communication in a VANET (Vehicular Ad Hoc NETwork), in particular for being executed by a system according to any of the above aspects 1) to 16), wherein said VANET includes a plurality of communication nodes, said communication nodes being aware of their geographic position, as well as one or more attachment points providing access to an external infrastructure network, in particular the Internet, and wherein a position-based routing protocol is implemented for routing data packets within said VANET, wherein in said communication nodes at least two different types of logical links are provided for the transport of IPv6 packets over sub-IP geographical routing, wherein one of said at least two different types of logical links is a geographical link - G link - being designed to have geographical logical boundaries, and wherein another of said at least two different types of logical links is a topological link - T link - being designed to have topological logical boundaries.

There are several ways how to design and further develop the teaching of the present invention in an advantageous way. To this end, it is to be referred to the patent claims subordinate to patent claim 1 on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will we explained.

In the drawings:
- Fig. 1: is a schematic view generally illustrating a typical VANET scenario, in which a method according to the present invention can be applied,
- Fig. 2: exemplarily illustrates a protocol architecture employed in a system according to an embodiment of the present invention,
- Fig. 3: illustrates the architecture of communication nodes with two logical interfaces according to an embodiment of the present invention,
- Fig. 4: is a schematic view exemplarily illustrating the processing of incoming traffic flow in the node architecture of Fig. 3,
- Fig. 5: is a schematic view exemplarily illustrating the logical topology introduced by a system according to the present invention,
- Fig. 6: is a schematic view illustrating an example of usage of a system according to the present invention with an optimized 1-hop flow,
- Fig. 7: is a schematic view illustrating another example of usage of a system according to the present invention with an optimized 3-hop flow, and
- Fig. 8: is a schematic view illustrating an example of usage of a system according to the present invention in connection with NEMO.

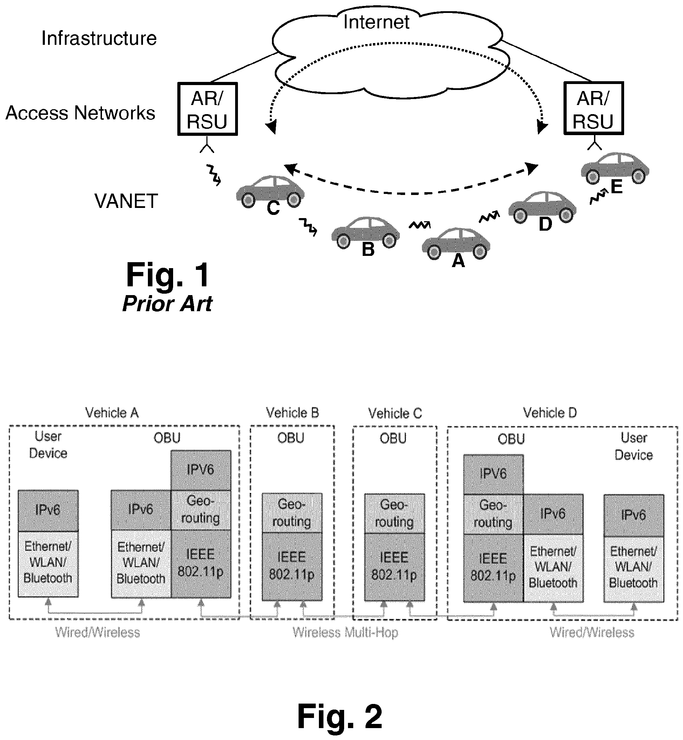

Fig. 1 schematically illustrates the general scenario of a vehicular ad hoc network (VANET) in which the system and the method according to the present invention can be applied. Typically, a very high number of vehicles are participating in the network as communication nodes. For the sake of clarity, in Fig. 1 only five vehicular communication nodes A-E are depicted. It is assumed that in the VANET a geographic routing mechanism is in place, which allows vehicles to route packets over multiple wireless hops for safety and non-safety purposes. Several access points being connected to the Internet (Road-Side Units, RSUs) are installed on the road-side. In Fig. 1, two of these RSUs are exemplarily shown.

In the situation presented in Fig. 1, no existing solution compatible with geographic routing allows i) VANET nodes to connect to the Internet relying on standard IPv6 mechanisms, like e.g. Neighbor Discovery and Stateless Address Autoconfiguration (SLAAC), which require link-local multicast support, and ii) to select the preferred packet route between the one via the VANET (dashed line) and the one via the Internet (dotted line). Existing solutions can be found where non-geographical routing protocols are used (described, for instance, in Carlos J. Bernados et al. "VARON: Vehicular Ad-hoc Route Optimization for NEMO", Computer Communications, Vol. 30, Issue 8, June 8, 2007, pp. 1765-1784) or standard IPv6 mechanisms can not be executed due to the lack of link-local multicast support (see for reference: F. Templin (Editor), "The MANET Virtual Ethernet (VET) Abstraction", draft-templin-autoconf-dhcp-14.txt, Internet Engineering Task Force, work-in-progress, April 2008).

Fig. 2 exemplarily illustrates a conceptual protocol architecture that may be employed in an embodiment of a system according to the present invention. The protocol architecture depicted in Fig. 2 is based on the stack currently deployed by the C2C-CC (Car to Car Communication Consortium) and is a subset of the ETSI ITS protocol architecture. It is assumed that geographical routing is in place, wherein the he geo-routing layer is considered as a sub-IP layer.

More specifically, Fig. 2 depicts four communication nodes - vehicle A, B, C, and D - that each comprises an on-board unit OBU and which are enabled to communicate over wireless multi-hop links with each other. In addition to the OBU, vehicle A und vehicle D include a user device, which might be a mobile phone or any other passenger device like e.g. an infotainment application device. The user devices can communicate with the OBU of the respective vehicle via wired and/or wireless links. Although not explicitly shown in Fig. 2, dedicated Road Side Units (RSU) may be provided along the road. These RSUs are part of an access network and act as access router (AR) or as a bridge which is attached via a wired or wireless connection to an AR. The AR provides access to an infrastructure network like e.g. the Internet.

A position-based routing protocol ("geographic routing" or "geo-routing") is implemented for forwarding packets to communication nodes which are located in a specified geographic area. For instance, in conventional IPv6 SLAAC, access routers periodically broadcast on their served link signaling messages, so called router advertisement RA messages, containing the network prefix assigned to the link. By means of the implemented geographic routing protocol, these RAs of an attachment point are forwarded to those communication nodes which are located within the geographic area which is associated with the respective attachment point. In the specific embodiment shown in Fig. 2, the position-based routing protocol is implemented as sub-IPv6 protocol layer, or more specifically between the layers IEE802.11-based MAC and IPv6.

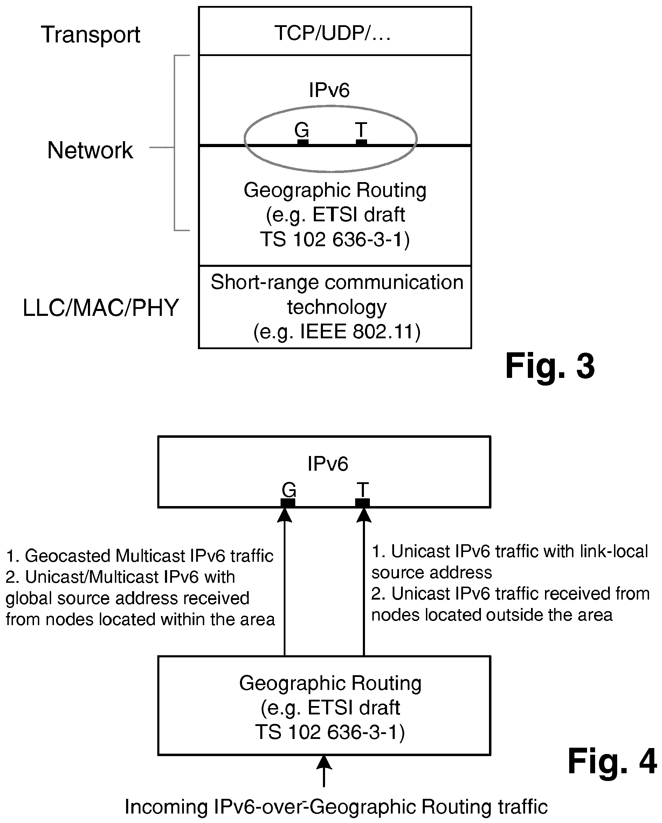

As to the integration of IPv6 and sub-IP geographic routing, the present invention proposes the deployment of at least two different types of logical links for the transport of IPv6 packets over sub-IP geographical routing: At least one geographical link - G link - having geographical logical boundaries, and at least one topological link - T link - having topological logical boundaries. A specific embodiment of a node architecture according to the present invention is illustrated in Fig. 3. In this protocol architecture, two logical interfaces (or "links" according to the definition given in IETF RFC 4861) are used for the transport of IPv6 packets over sub-IP geographical routing. An example of this sub-IP layer is the draft standard ETSI TS 102636-3-1, which is illustrated in Fig. 2.

The logical interfaces "G" (geographical G links) are designed as multicast capable links (RFC 4861). This capability is achieved by mapping IPv6 link-local multicast destination addresses (e.g. FF02::1 and FF02::2, RFC 3513) into geographical areas at sub-IP layer. The sub-IP geographic routing layer presents all the vehicles within a predefined geographical area as 'on-link' (both if they are reachable via 1 or N physical hops) and the vehicles located outside this area as 'off-link'. The area that acts as link-local multicast domain for a particular G link can be enforced in different ways. For example by letting RSUs use the area as target of their geocasted Router Advertisements according to the mechanism described in WO 2009/018835 A1. Alternatively, other mechanisms can be used to assign an area to a G link which is common to multiple VANET nodes (e.g. default, manually configured, pre-defined shape and size centered or positioned relatively to the vehicle's position). If a RSU is available, a G link can be used to acquire a globally valid (a.k.a. globally routable) address for communications with nodes attached to the Internet. Multiple links of type G can be used simultaneously, for example associated to different areas. Optionally, all G links can be disabled if no IPv6 multicast is required (e.g. no RSU available). A desired yet not mandatory behavior is that if the VANET node is an IPv6 host (instead of a router) with respect to G links it follows the strong end-system model (IETF RFC 1122). This means that the IPv6 source address of packets outgoing through a G link is only an addressed assigned to that G link. Finally, G links can be used as egress interface to support NEMO (RFC 3963), since Stateless Address Autoconfiguration is supported thank to the properties of G links.

The logical interfaces "T" (topological T links) of the embodiment illustrated in Fig. 3 are designed as non-broadcast multi-access links (NBMA, as defined in IETF RFC 4861) that are not subject to any geographical scope. This means that link-local multicast addressing is not supported by T links. Consequently, broadcast of IPv6 packets is not allowed on T links. In principle T links are not subject to any geographical limitation of multi-hop scope enforced at sub-IP layer. This means that via a T link a node can reach any other node for which a multi-hop path exists. T links are not meant for communications with nodes in the Internet but only for communication with other vehicles and RSUs. Therefore, a T link does not have a globally routable address but only a link-local address. If a communication with other nodes takes place via a T link, the sub-IP layer presents nodes that are N-hops away as 'on-link'. Finally, in order to allow for optimized packet routes via the VANET, the IPv6 source address of packets outgoing through T links may be an address assigned on a different interface. This implies that if the node is an IPv6 host (instead of a router) with respect to T links the node follows the weak end-system model (as opposed to the strong end-system model defined in RFC 1122).

For both link types G and T, IPv6 unicast destination addresses are mapped into sub-IP unicast identifiers.

As regards the multiplexing/de-multiplexing of data packets between the two types of link and between links of the same type, a set of basic policies may be introduced. For incoming packets this is illustrated in Fig. 4. The sub-IP geographic routing layer de-multiplexes received IPv6 packets and delivers them to one of the virtual links. A delivery via G links is performed for geocasted IPv6 multicast packets as well as for IPv6 unicast packets with a global source address and IP originated from/forwarded by nodes located within the same area (e.g. vehicle-to-Internet traffic forwarded by a RSU, vehicle-to-vehicle traffic using globally valid addresses). In the case that multiple G links are used, if the area associated to the links are non-overlapping, packets can be de-multiplexed according to the area in which the source is located. Other custom policies can be used for the de-multiplexing of incoming packets.

On the other hand, delivery via T links is performed for IPv6 unicast packets with link-local source address (e.g. vehicle-to-vehicle using link-local addresses) as well as for IPv6 unicast packets with either link-local or global source address received from nodes located outside the area (e.g. vehicle-to-vehicle when vehicles are connected to different RSUs serving adjacent areas). In the case that multiple T links are used, custom policies can be used to de-multiplex packets (e.g. based on the distance).

For outgoing packets, the sub-IP geographic routing layer receives packets from IPv6 via both type of links (G and T). In this case, the link selection can be operated by IPv6 or by applications according to custom policies (for instance as specified in IETF RFC 3484 and IETF RFC 5014). The present solution is totally compatible with these methods and does not require any changes.

Outgoing packets delivered via G links: IPv6 packets with a link-local multicast destination address sent via G are geocasted to the area previously set (e.g. according to the mechanism described in WO 2009/018835 A1). For unicast packets, IPv6, by default, provides a link-layer destination address. The unicast delivery mechanism of the sub-IP geographical routing layer is used to deliver the packet to this sub-IP identifier (the process might include signaling at sub-IP layer before the actual transmission).

Outgoing packets delivered via T links: only unicast IPv6 packets are allowed on T. The unicast delivery mechanism of the sub-IP geographical routing layer is used to deliver the packet to this sub-IP identifier (the process might include signaling at sub-IP layer before the actual transmission).

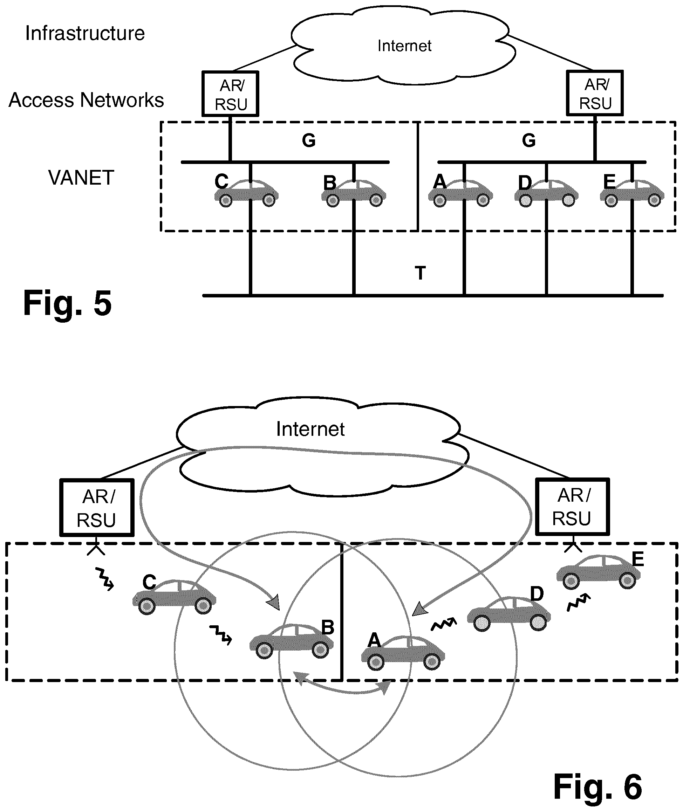

Fig. 5 illustrates the same VANET scenario as Fig. 1 together with the same infrastructure network and RSU implemented Access Points. In addition, Fig. 5 illustrates the logical network topology that is introduced by the present invention when applied to this scenario. This logical network topology summarizes the main benefit of the present invention. G links are logically shared among vehicles located in the same area, T links are logically shared among all VANET nodes, which allows nodes located in different areas to communicate.

The logical network topology introduced by the invention allows for detection and selection of both packet routes (i.e. via the Internet and via the VANET). The additional steps to be carried out before a vehicle is actually able to select a different route include: prefix detection, node reachability assessment, security signaling and injection of routes in the IPv6 routing table. Once both peers have injected the respective routes, IPv6 flows involving the peers' global addresses assigned on G links are routed via T links. This behavior is common for IPv6 routers, whereas for IPv6 hosts it implies the weak end-system model (as opposed to the strong end-system model defined in RFC 1122) but does not break any IETF standard.

Figs. 6-8 illustrate three different examples of usage scenarios of the method according to the present invention. Fig. 6 depicts an optimized 1-hop IPv6 flow. Internet access is provided by G links where the geographical area used as link-local multicast domain is set by the RSUs as adjacent, non-overlapping. Consequently, communication between vehicles A and B (being attached to the Internet via different RSUs) via G links would require an Internet-based route. Therefore, the direct route between vehicles A and B (that are geographically located rather close to each other) is preferred to the Internet-based route.

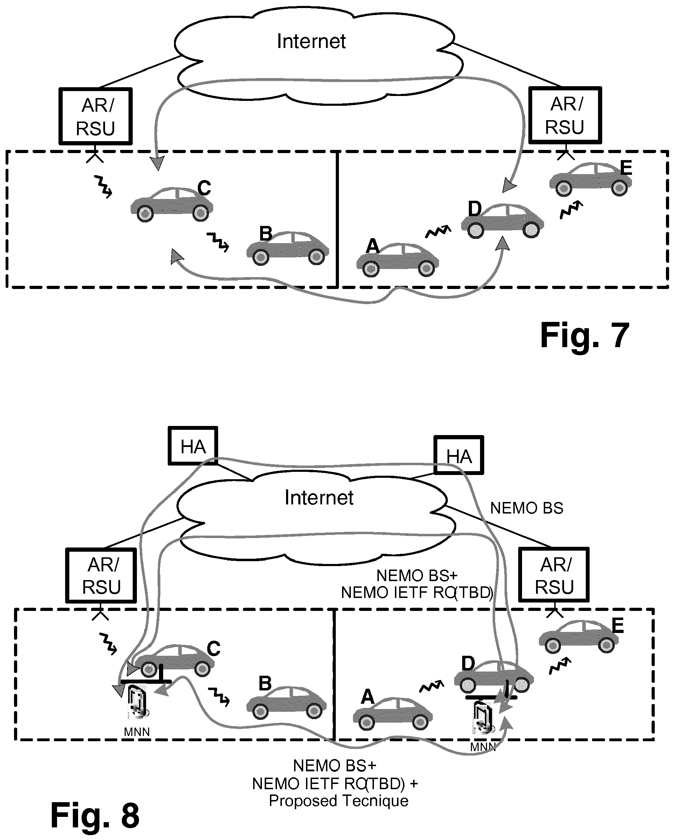

Fig. 7 shows a similar example, where the direct route is through a multi-hop path. Although the communication between vehicles C and D via T links includes a path with three hops, since vehicles C and D belong to different link-local multicast domains it is still favorable to use the T links for the communication, instead of employing the G links (which would require the routing of packets via the Internet).

Fig. 8 shows the usage of the present invention together with NEMO (RFC 3963), where the present invention allows for further optimization of the packet routing as compared to the optimization procedures currently being defined by the IETF MEXT WG (Mobility EXTensions for IPv6 Working Group), which involve only globally valid addresses.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A communication node for enabling IPv6-based communication in ad hoc network, wherein the communication node being storing a geographic position of the communication node,
wherein a position based routing protocol is implemented for IPv6 packet, and
wherein in said communication node at least two different types of logical links are provided for the transport of the IPv6 packet over sub-IP geographical routing,
wherein one of said at least two different types of logical links is a geographical link being designed to have geographically scoped boundaries,
wherein one of said at least two different types of logical links is a topological link being designed to have topologically scoped boundaries, **characterized in that** said geographical link is a link-local multicast capable link and the IPv6 packet is transmitted with link-local multicast address via the geographical link.

2. The communication node according to claim 1, wherein the communication node comprises an attachment point configured to provide access to an Internet.

3. The communication node according to claims 1 or 2, wherein said geographical link is assigned a dynamic target area relative to said communication node's current geographical position.

4. The communication node according to any of claims 1 to 3, wherein a plurality of geographical links are employed simultaneously, said geographical links being associated to different geographic areas.

5. The communication node according to any of claims 1 to 4, wherein on said geographical link IPv6 unicast traffic is mapped into sub-IP unicast destination identifiers.

6. The communication node according to any of claims 1 to 4, wherein said geographical link is employed for acquiring globally valid address for communication with node located in the Internet.

7. The communication node according to any of claims 1 to 6, wherein on said topological link IPv6 unicast traffic is mapped into sub-IP unicast destination identifiers.

8. The communication node according to any of claims 1 to 7, wherein broadcast traffic on said topological link is mapped to a hop count-based broadcast at sub-IP layer.

9. The communication node according to any of claims 1 to 8, wherein IPv6 source address of packet outgoing through said topological link is address assigned on a different interface.

10. The communication node according to any of claims 1 to 9, wherein multiplexing of packets the sub-IP geographical routing layer receives from said at least two logical links and/or de-multiplexing of packets arriving at the sub-IP geographical routing layer together with delivering said packets to one of said logical links is performed on the basis of said packet's destination address type.

11. The communication node according to any of claims 1 to 9, wherein multiplexing of packets the sub-IP geographical routing layer receives from said at least two logical links and/or de-multiplexing of packets arriving at the sub-IP geographical routing layer together with delivering said packets to one of said logical links is performed on the basis of the area in which said packet's source node is located.

12. The communication node according to any of claims 1 to 10, wherein said communication nodes are configured to inject IPv6 routes in their IPv6 routing table for said geographical link and/or said topological link operated by said sub-IP geographical routing layer or a management entity on behalf of it.

13. The communication node according to any of claims 1 to 12, wherein said geographical link is disabled in case no IPv6 globally routable addresses are required or no IPv6 multicast communication is required.

14. The communication node according to any of claims 1 to 13, wherein said topological link is employed for facilitating establishment of optimized packet routes for communication among passenger devices.

15. Method for a communication node for enabling IPv6-based communication in ad hoc network, wherein the communication node being storing a geographic position of the communication node,
wherein a position based routing protocol is implemented for IPv6 packet, and
wherein in said communication node at least two different types of logical links are provided for the transport of the IPv6 packet over sub-IP geographical routing,
wherein one of said at least two different types of logical links is a geographical link being designed to have geographically scoped boundaries,
wherein one of said at least two different types of logical links is a topological link being designed to have topologically scoped boundaries, **characterized in that** geographical link is a link-local multicast capable link and the IPv6 packet is transmitted with link-local multicast address via the geographical link.
